# EUROPEAN PATENT SPECIFICATION

(11) **EP 1 553 742 B1**
(45) Date of publication and mention of the grant of the patent: **26.12.2007**
(21) Application number: 04290070.4
(22) Date of filing: 09.01.2004
(51) Int. Cl.: H04L 25/03, H04B 10/158

(54) **Receiver for optical signals comprising a Viterbi equalizer and an analog electronic equalizer**
Empfänger für optische Signale mit einem Viterbi-Entzerrer und einem analogen, elektronischen Entzerrer
Récepteur pour signaux optiques comprenant un égaliseur de Viterbi et un égaliseur électronique analogique

(43) Date of publication of application: 13.07.2005
(60) Divisional application: 05291397.7
(73) Proprietor: Alcatel Lucent, 75008 Paris (FR)
(72) Inventor: Bülow, Henning, Dr., 70806 Kornwestheim (DE); Buchali, Fred, Dr., 71336 Waiblingen (DE); Thielecke, Gunther, 12459 Berlin (DE)
(74) Representative: Schmidt, Werner Karl

(56) References cited:
- US-A1- 2002 118 768
- BÜLOW H ET AL: "Electronic PMD mitigation - from linear equalization to maximum-likelihood detection" OPTICAL FIBER COMMUNICATION CONFERENCE. (OFC). TECHNICAL DIGEST POSTCONFERENCE EDITION. ANAHEIM, CA, MARCH 17 - 22, 2001, TRENDS IN OPTICS AND PHOTONICS SERIES. TOPS. VOLUME 54, WASHINGTON, WA : OSA, US, vol. VOL. 1 OF 4, 2001, pages WAA3-1-WAA3-3, XP010546448 ISBN: 1-55752-655-9
- LI Z ET AL: "BREADTH-FIRST ALGORITHM WITH ADAPTIVE FORNEY STRUCTURE FOR ISI CHANNELS" IEEE GLOBECOM 1998. GLOBECOM '98. THE BRIDGE TO GLOBAL INTEGRATION. SYDNEY, NOV. 8 - 12, 1998, IEEE GLOBAL TELECOMMUNICATIONS CONFERENCE, NEW YORK, NY : IEEE, US, vol. VOL. 5, 1998, pages 2853-2858, XP000801563 ISBN: 0-7803-4985-7

## Description

### Technical field:

The invention relates to a receiver for optical signals according to claim 1, plus methods for improving the exactness of a receiver for optical signals when identifying digitalized data transmitted by the analog optical signal by means of measures in the analog area of said receiver for optical signals.

In the document "Electronic PMD mitigation - from linear equalization to maximum likelihood detection", Tech. Dig. OFC'01, Anaheim, March 17-22, 2001, Trends in optics and photonics series, Vol. 54, pages WAA3-1 - WAA3-3, ISBN: 1-55752-655-9, by H. Bühlow and G. Thielecke, a receiver for optical signals comprising a feed forward equalizer for equalizing the received optical signal, an analog-to-digital converter for converting the equalized optical signal to a digital soft data signal comprising interim values indicating the value of the amplitude of the equalized optical signal, and a Viterbi equalizer for relating the digital soft data signal to binary data is disclosed.

### Background of the invention:

The invention relates to a receiver for optical signals according to Claim 1.
To transmit digital data, particularly over long distances, analog optical signals are used. Such optical signals when transmitted are subject to some distortion, which must be compensated. This is achieved by using compensators, for example equalizers, at the optical receivers.
Viterbi equalizers are digital electronic equalizers with lowest penalties for signal distortion. But the careful adaptation of such equalizers requires additional functionality only available as digital adaptation.

Moreover, the construction of such digital circuits is quite demanding and cost-intensive. Due to this, such solutions are not optimal for digital adaptation which requires very high effort in digital domain.
A possibility to reduce costs and efforts is the use of analog electronic linear equalizers or Viterbi equalizers, which are available up to 10Gbit/s. But due to some limitation of the number of taps (≤5) workable, such analog equalizers exhibit a too high residual optical signal-to-noise ratio (OSNR) penalty in excess of 2dB, which is not sufficient for e.g. 10G receivers, 2.5G receivers and 10G ethernet or in 10 to 40 Gbit/s transmission systems, long-haul and metro systems.
For medium dispersion (i.e. a polarization mode dispersion with a differential group delay of less than a bit period = 100ps), FFE structures with many taps have theoretically the potential to achieve low residual penalty, but only 5 taps or less can be realized as analog electronic circuit.
On the other hand, the Viterbi equalizer can compensate for very high dispersion of more than 100ps differential group delay, but for moderate distortions (below 100ps) it cannot bring down the residual penalty to the low value which is requested (<2dB).
By improving the receiver's ability to identify digital data transmitted by the analog signal, leading to a reduced number of amplifiers along the transmission path, costs can be reduced and the error rate of the data received can be lowered.

### Technical purpose of the invention:

The technical purpose of the invention is to develop a receiver for optical signals comprising a Viterbi equalizer capable of improving the exactness when identifying digitalized data transmitted by the analog optical signal by means of measures in the analog area of a receiver for optical signals or measures relating to the analog signal, and to develop methods for improving the exactness when identifying digitalized data transmitted by the analog optical signal by means of measures in the analog area of the receiver.

### Disclosure of the invention and its advantages:

Tha basic idea of the invention is to improve signal identification by means of measures in the analog area of the receiver instead of in the digital area of said receiver which allow to preprocess and improve the analog signals fed to an analog-to-digital converter (ADC) by means of an analog equalizer placed in front of the ADC, and/or allowing to obtain an estimation of the distortion, variance and mean-value shift of the analog signal belonging to a digital symbol, with the estimated values then fed to a digital equalizer placed behind the ADC, in order to thereby improve the quality of the identification of the digital signals.
For this purpose, the receiver comprises a feed forward equalizer as a variable and adaptive filter for the signals before the signals are to be processed by the Viterbi equalizer. The analog signal is preprocessed by the feed forward equalizer in the analog signal path, whereby its quality, which can be determined by a Q-factor measurement, for example, is improved. The Viterbi equalizer converts the analog signal samples commonly into a 3- or 4-bit word, demultiplexes the digitised data and processes the parallel data according to the Viterbi algorithm.

In said receiver with the features of claim 1, the feed forward equalizer is connected with an adaptation control means connected to the Viterbi equalizer, which adjusts the tap coefficients (Cᵢ) of the FFE by using analog-to-digital converted signal samples, which can be taken up by the Viterbi equalizer and from which the error signal and the setting of the taps can be digitally calculated in the adaptation control means. For moderate high distortions, the proposed solution has a residual penalty less than when a single equalizer is used. The invention can be used in an optical backbone as well as in WAN, MAN and submarine networks.

In a preferred embodiment of said invention, said feed forward equalizer comprises a number of taps less than or equal to 6. It is suggested to use a simple feed forward equalizer with only few taps, particularly three for processing the signal before being transmitted to a Viterbi equalizer to further reduce the residual penalty of latter. An analog electronic equalizer set up with minimal complexity like that has the advantage that it can be produced easily and cheaply and that it is capable to work exactly enough to effect an improvement of the signal evaluation. For the equalization of electrical signals, for example in a modem or a mobile radio, more complex pre-filters are known. As a result of their complexity, they reduce the efforts of the Viterbi equalizer for very strong distortions like signal spread over many bit slots. For medium strong distortions of optical signals it is suggested to use as an electronic equalizer a simple analog FFE with only three to six taps, which is adjusted by the actual distortion according to an optimum FFE output signal (i.e. least-mean-square adaptation or similar higher-order criterion suitable for optical noise) and to further reduce the residual penalty of the FFE by attaching a Viterbi equalizer at its output.

In an additional preferred embodiment of said invention, an automatic gain control is integrated into the analog electronic equalizer or is placed in the analog signal path of the receiver together with the analog electronic equalizer. The quality of the identification and relation of the digital signals on the receiver side can be further improved by installing an automatic gain control in the transmission path directly after the opto-electrical signal conversion and in front of the ADC, which amplifies the amplitudes of all incoming analog signals until they have the same absolute value.

In order to further improve the exactness when identifying digitalized data transmitted by an analog signal, a parameter-estimation device for obtaining estimated values indicating the degree of distortion of the optical signals may be connected with the analog signal path, with the parameter-estimation device connected with the Viterbi equalizer for transmitting the estimated values gained from the analog signal to the Viterbi equalizer. The exactness of a Viterbi equalizer can be increased by supplying it with estimated values indicating the distortion and noise of the optical signal, for example with regard to the variance and the mean value of the amplitude particularly of data symbols, e.g. three-bit combinations '1-0-1' or '0-1-0'. In the digital signal path, such an estimation would be accompanied by considerable efforts and costs, whereas said invention, comprising a parameter-estimation device connected to the analog signal path and the Viterbi equalizer for estimating the distortion of the optical signal on the basis of the analog signal, can be realized cost-efficiently. It is suggested to perform an analog adaptation by using a circuit structure comparable to a decision feedback equalizer. At first, the analog signal is demultiplexed while the demux is driven by the decision feedback equalizer to integrate all different symbols separately. The mean value is given by the integrator output and the variance is equal to the AC amount of the integrator output. Such realization is simpler than a digital one and less hardware-critical concerning size and power consumption. Preferably, a feedback of the digital signal outputted by the Viterbi equalizer to the parameter-estimation device should be made possible, whereby a further increase in the quality of the digital signal could be achieved by lowering the error rate.

The receiver preferably comprises such a decision feedback equalizer controlling a demultiplexer through which digitalized-data-transmitting analog signals are transmitted to obtain an integration of the demultiplexed analog signals, with the decision feedback equalizer being connected wit the Viterbi equalizer. The Viterbi equalizer data sequences estimation is improved by means of the values supplied by the decision feedback equalizer comprising an estimation of the degree of distortion of the optical signal, whereby an increase in the exactness of the Viterbi equalizer can be achieved. The parameter estimation is particularly advantageous, since the estimated values depend on the occurrence of nonlinearities and noise, and since the noise varies.

Preferably both at least one feed-forward equalizer is accommodated in the optical receiver for improving the quality of the analog signal and at least one parameter-estimation device is connected with the Viterbi equalizer and the analog signal path in the receiver for obtaining estimated values indicating the degree of distortion of the optical signal and for supplying these values to the Viterbi equalizer for increasing the Viterbi equalizer's exactness when digital values are related to the analog signal. Compared to the state of the art, a clear improvement of the quality and the exactness of relating digital signals to the analog signal in the Viterbi equalizer is achieved, without the need to install complex digital electronic circuits in the digital signal path. With regard to the exactness of the identification and relation of digital signals to the analog signal, said invention allows to use analog devices, preferably an analog feed-forward equalizer and a decision feedback equalizer, that can be set up and integrated easily while being capable of being at least as reliable and powerful as complex digital electronic circuits. Moreover, the circuit proposed in the course of the invention is faster.

The invention is further realized in a method for improving the ability of an optical receiver to identify digitalized data transmitted by analog optical signals according to claim 4.

It is further possible to improve the ability of an optical receiver to identify digitalized data transmitted by analog optical signals using a method comprising the following steps:
- obtaining an estimated value indicating the distortion of an incoming analog optical signal by means of an analog electronic equalizer, preferably a decision feedback equalizer,
- further processing of this estimated value into a form processable by a Viterbi equalizer,
- feeding this estimated value into the Viterbi equalizer,
- transforming the digital soft data obtained from the analog signal by means of an analog-to-digital converter (ADC) into binary data (i.e. hard data only consisting of '0' and '1') in the Viterbi equalizer with the help of interim values obtained from the analog signal indicating the degree of distortion of the analog signal.

It is particulary preferable to apply both methods in parallel, wherein the gaining of the estimated values takes place prior to the analog equalization of the analog signal.

### Brief description of the drawing, with

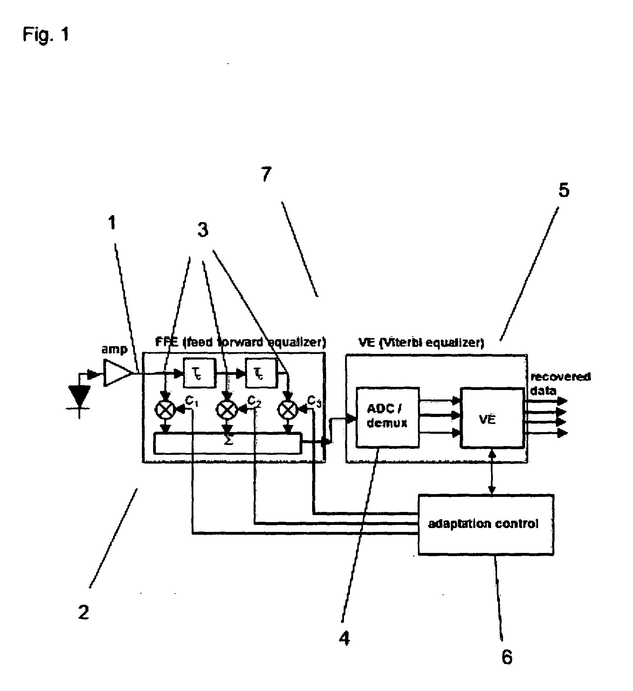

- Figure 1: showing a receiver for optical signals with a feed forward equalizer placed in the analog signal path with three taps, the feed forward equalizer's output signal fed to a Viterbi equalizer over an analog-to-digital converter (ADC), with the tap coefficients being determined by means of an adaptation control connected to the Viterbi equalizer,

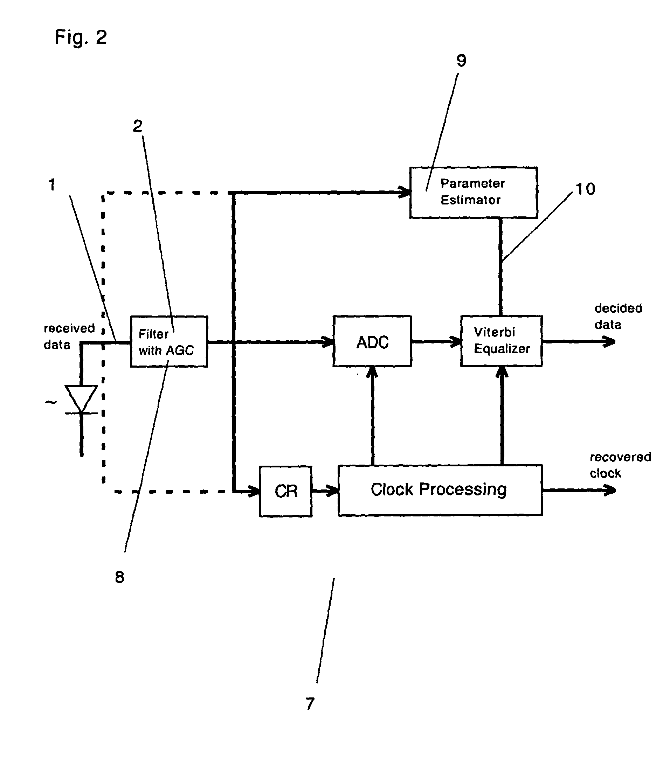

- Figure 2: showing a receiver for optical signals according to said invention, comprising, besides a feed forward equalizer, both an automatic gain control integrated into the feed forward equalizer and a parameter-estimation device connected with the analog signal path and the Viterbi equalizer.

### Paths for performing the invention:

A receiver 7 for optical signals as shown in Figure 1, comprising a feed forward equalizer 2 with three taps 3 placed in the analog signal path 1, has its output connected with an analog-to-digital converter (ADC) 4. The ADC 4 transforms the analog signals into digital soft data, which, unlike binary data that consist only of the values '0' and '1', comprises interim values, indicating the value of the amplitude of the analog signal. The digital soft data is fed to a Viterbi equalizer 5, with the tap coefficients determined by an adaptation control 6 connected to the Viterbi equalizer 5.
The feed forward equalizer 2 consist of an analog electronic circuit having a tap spacing TC of 1 bit period (100ps at 10G), but it can also be a fractionally spaced type (TC<100ps). The tap coefficients Cᵢ are adjusted to an optimum improvement at the feed forward equalizer 2 output by the adaptation control 6. This can be performed by observing the signal at the output with an additional decision gate and by generating an error signal. An alternative way is to use parts of the attached Viterbi equalizer 5 as shown in Figure 1, since it already provides signal samples in an analog-to-digital converted form. Then the error signal and the setting of the taps can be digitally calculated in the adaptation control 6. The Viterbi equalizer 5 converts the analog signal samples commonly into a 3- or 4-bit word, demultiplexes the digitized data (e.g. down to 311 or 622 MHz) and processes the parallel data according to the Viterbi algorithm. The clock recovery, clock path and Viterbi equalizer adaptation are not shown in Figure 1.
For moderate high distortions the residual penalty is less than the value of either a single feed forward equalizer or a single Viterbi equalizer. For example, with a 3-tap feed forward equalizer 2 and a Viterbi equalizer 5 (4 states), the OSNR penalty (at 75ps differential group delay) can be reduced from 2.5dB without feed forward equalizer to very attractive low 2dB. For high distortions (which might be out of the envisaged operation range of a product) the penalty of the Viterbi equalizer 5 is not worse than without feed forward equalizer 2, which allows seamless operation over the whole range, from low to high distortions.

Figure 2 shows a receiver 7 for optical signals, comprising, besides a feed forward equalizer 2 as shown in Figure 1, an automatic gain control device 8 integrated into the feed forward equalizer 2. Furthermore, a parameter-estimation device 9 is shunt-connected to the Viterbi equalizer 5. The parameter-estimation device 9 is connected to the analog signal path 1 and, through this connection 10, is capable of obtaining estimated values indicating the degree of distortion of the optical signal. These estimated values are then fed to the Viterbi equalizer 5, whereby the exactness of the Viterbi equalizer 5 with regard to relating digital values to the analog signal is increased, since the estimated values offer an indication as to which interim value represents the boundary value for relating a digital soft data signal to a binary data signal '0' or '1' in the Viterbi equalizer 5.

### Commercial applicability:

The invention is commercially applicable particularly in the field of production and operation of networks for optical and/or electromagnetic data transmission.

### List of reference numerals

- 1: analog signal path in the optical receiver
- 2: feed forward equalizer
- 3: tap
- 4: analog-to-digital converter (ADC)
- 5: Viterbi equalizer
- 6: adaptation control
- 7: receiver for optical signals
- 8: automatic gain control device
- 9: parameter-estimation device
- 10: connection

## Claims

1. Receiver (7) for analog optical signals comprising an analog feed forward equalizer (2) for equalizing the received analog optical signal, an analog-to-digital converter (4) for converting the equalized analog signal to a digital soft data signal comprising interim values indicating the value of the amplitude of the equalized analog signal, and a Viterbi equalizer (VE) for relating the digital soft data signal to binary data, wherein the feed forward equalizer (2) and the Viterbi equalizer (VE) are connected to a digital adaptation control means (6) to which the digital soft data signal is fed for adjusting the tap coefficients (Cᵢ) of the feed forward equalizer (2).

2. Optical receiver according to Claim 1 **characterized in that** said feed forward equalizer (2) comprises a number of taps (3) less than or equal to 6.

3. Optical receiver according to one of the previous claims, **characterized in that** an automatic gain control (8) is integrated into the feed forward equalizer (2) or that an automatic gain control (8) is placed in the analog signal path (1) of the receiver (7) together with the feed forward equalizer (2).

4. Method for improving the ability of an optical receiver to identify digitalized data transmitted by analog optical signals, comprising the steps of
- analog equalization of the received analog optical signal in a feed forward equalizer (2),
- subsequent analog-to-digital conversion of the equalized analog signal into a digital soft-data signal comprising interim values indicating the value of the amplitude of the equalized analog signal,
- feeding the digital soft data signal to a Viterbi equalizer (VE),
- relating the digital soft data signal to binary data in the Viterbi equalizer (VE),
- feeding the digital soft data signal to a digital adaptation control means (6) for adjusting the tap coefficients (Cᵢ) of the feed forward equalizer (2).

## Patentansprüche

1. Empfänger (7) für analoge optische Signale, der einen analogen Vorwärts-Entzerrer (2) zum Entzerren des empfangenen analogen optischen Signals, einen Analog-Digital-Wandler (4) zur Umwandlung des entzerrten Signals in ein digitales Softdatensignal, das Zwischenwerte umfasst, die den Amplitudenwert des entzerrten analogen Signals angeben, und einen Viterbi-Entzerrer (VE) für die Zuordnung von binären Daten zu dem digitalen Softdatensignal umfasst, wobei der Vorwärts-Entzerrer (2) und der Viterbi-Entzerrer (VE) mit einer digitalen adaptiven Steuervorrichtung (6) verbunden sind, an die das digitale Softdatensignal zur Anpassung der Tap-Koeffizienten (Cᵢ) des Vorwärts-Entzerrers (2) übermittelt wird.

2. Optischer Empfänger gemäß Anspruch 1, **dadurch gekennzeichnet, dass** der genannte Vorwärts-Entzerrer (2) eine Anzahl an Taps (3) umfasst, die unter oder gleich 6 beträgt.

3. Optischer Empfänger gemäß einem der vorgenannten Ansprüche, **dadurch gekennzeichnet, dass** ein automatischer Verstärkungsregler (8) in den Vorwärts-Entzerrer (2) integriert oder neben dem Vorwärts-Entzerrer (2) ein automatischer Verstärkungsregler im analogen Signalweg (1) des Empfängers (7) angeordnet ist.

4. Verfahren zur Verbesserung der Fähigkeit eines optischen Empfängers, die digitalisierten Daten zu identifizieren, die über analoge optische Signale übertragen werden, das die folgenden Schritte umfasst:
- analoge Entzerrung des empfangenen analogen optischen Signals in einem Vorwärts-Entzerrer (2),
- anschließende Analog-Digital-Umwandlung des entzerrten analogen Signals in ein digitales Softdatensignal, das Zwischenwerte umfasst, die den Amplitudenwert des entzerrten analogen Signals angeben,
- Übermittlung des digitalen Softdatensignals an einen Viterbi-Entzerrer (VE),
- Zuordnung von binären Daten zu dem digitalen Softdatensignal im Viterbi-Entzerrer (VE),
- Übermittlung des digitalen Softdatensignals an eine digitale adaptive Steuervorrichtung (6) zur Anpassung der Tap-Koeffizienten (Cᵢ) des Vorwärts-Entzerrers (2).

## Revendications

1. Récepteur (7) de signaux optiques analogiques comprenant un égalisateur de précompensation analogique (2) pour égaliser le signal optique analogique reçu, un convertisseur analogique-numérique (4) pour convertir le signal analogique égalisé en un signal de données numériques temporaires comprenant des valeurs provisoires indiquant la valeur de l'amplitude du signal analogique égalisé, et un égalisateur de Viterbi (VE) pour relier les données numériques temporaires à des données binaires, dans lequel l'égalisateur de précompensation (2) et l'égalisateur de Viterbi (VE) sont connectés à un moyen de commande d'adaptation numérique (6) auquel est appliqué le signal de données numériques temporaires pour régler les coefficients de branchements (Cᵢ) de l'égalisateur de précompensation (2).

2. Récepteur optique selon la revendication 1, **caractérisé en ce que** ledit égalisateur de précompensation (2) comprend un nombre de branchements (3) inférieur ou égal à 6.

3. Récepteur optique selon l'une des revendications précédentes, **caractérisé en ce que** une commande automatique de gain (8) est intégrée dans l'égalisateur de précompensation (2) ou **en ce qu'**une commande automatique de gain (8) est placée sur le chemin du signal analogique (1) du récepteur (7) avec l'égalisateur de précompensation (2).

4. Procédé d'amélioration de la capacité d'un récepteur optique à identifier des données numérisées transmises par des signaux optiques analogiques, comprenant les étapes suivantes :
- égalisation analogique du signal optique analogique reçu dans un égalisateur de précompensation (2),
- conversion analogique-numérique suivante du signal analogique égalisé en un signal de données numériques temporaires comprenant des valeurs provisoires indiquant la valeur de l'amplitude du signal analogique égalisé,
- application des données numériques temporaires à un égalisateur de Viterbi (VE),
- mise en liaison du signal de données numériques temporaires avec les données binaires dans l'égalisateur de Viterbi (VE),
- application du signal de données numériques temporaires sur un moyen de commande d'adaptation numérique (6) pour régler les coefficients de branchements (Cᵢ) de l'égalisateur de précompensation (2).
